# EUROPÄISCHE PATENTSCHRIFT

(11) **EP 1 508 953 B1**
(45) Veröffentlichungstag und Bekanntmachung des Hinweises auf die Patenterteilung: **15.05.2013**
(21) Anmeldenummer: 04012968.6
(22) Anmeldetag: 02.06.2004
(51) Int. Cl.: H02K 1/14

(54) **Hauptelement für eine elektrische Maschine**
Main element of an electric machine
Elément principal d'une machine électrique

(30) Priorität: 21.08.2003 DE 10338453
(43) Veröffentlichungstag der Anmeldung: 23.02.2005
(73) Patentinhaber: ROBERT BOSCH GMBH, 70442 Stuttgart (DE)
(72) Erfinder: Sponar, Heiko, 76437 Rastatt (DE); Evans, Steven-Andrew, 77813 Buehl (DE)

(56) Entgegenhaltungen:
- AT-B- 304 694
- US-A- 4 912 353
- PATENT ABSTRACTS OF JAPAN Bd. 2000, Nr. 11, 3. Januar 2001 (2001-01-03) & JP 2000 236638 A (HITACHI LTD), 29. August 2000 (2000-08-29)

## Beschreibung

### Stand der Technik

Die Erfindung geht aus von einem Hauptelement für eine elektrische Maschine, insbesondere von einem Stator für einen permanentmagnetisch erregten, elektronisch kommutierten Motor, nach dem Oberbegriff des Anspruchs 1.

Die Segmentierung des Magnetkreises eines Hauptelements, also des Stators oder Rotors, einer elektrischen Maschine, d.h. das Einsetzen der Polzähne in das entsprechend vorbereitete, hohlzylindrische Rückschlussjoch, dient zur Erreichung eines hohen Nutfüllfaktors der elektrischen Wicklung, das ist das Verhältnis des Kupferquerschnitts in einer von zwei Polzähnen begrenzten Nut zu der lichten Querschnittsfläche der Nut. Ein höherer Nutfüllfaktor ermöglicht es, die axiale Länge der Maschine zu verringern und damit eine kleinere, leichtere und kostengünstigere Maschine, insbesondere Motor, zur Verfügung zu stellen.

Bei einem bekannten Stator für einen elektronisch kommutierten Motor mit permanentmagneterregtem Außenläufer (WO 99/33 157 A1) weisen die Polzähne einen schwalbenschwanzförmigen Zahnfuß und die Aufnahmenuten in dem Rückschlussjoch ein exakt zur Schwalbenschwanzform passendes Gegenstück auf. Beim Einstecken der Zahnfüße in die Aufnahmenuten wird ein Presssitz hergestellt, der die Polzähne im Rückschlussjoch festlegt. Um die Einpresskraft und Verformungen beim Fügen der Polzähne zu reduzieren, ist an der Fügelinie von Zahnfuß und Aufnahmenut teilweise ein Luftspalt derart vorgesehen, dass ein Presssitz der Zahnfüße nur in einem Teilbereich einer jeden Aufnahmenut erfolgt. In Umfangsrichtung des Rückschlussjoches gesehen ist die Breite der Zahnfüße kleiner als die Breite der Zahnschäfte ausgeführt, damit die vorgefertigten Spulen der Statorwicklung vor Einsetzen der Polzähne in das Rückschlussjoch auf die Zahnschäfte aufgeschoben werden können. Nach Montage des Stators werden die Spulen in Radialrichtung zwischen den breiten Zahnköpfen und dem Rückschlussjoch gehalten. Polzähne und Rückschlussjoch bestehen aus einer Vielzahl von axial aneinandergereihten Blechstanzteilen, die durch Stanzpaketierung zusammengehalten sind.

Bei einem ebenfalls bekannten Stator für einen als Innenoder Außenläufer konzipierten Motor oder Generator (EP 1 235 325 A1 Fig. 6) sind die Zahnfüße ebenfalls mit einer in Umfangsrichtung gesehenen Breite ausgeführt, die kleiner oder gleich der Breite der Zahnschäfte ist.

Mit der JP 200236638 A ist ein Stator einer elektrischen Maschine bekannt geworden, bei dem die einzelnen Polzähne einen breiten Zahnfuß aufweisen, mit dem diese mittels einer Schwalbenschwanzverbindung in einen Rückschlussring des Stators eingesetzt werden.

Die AT304694 OE zeigt einen Stator, bei dem an den Fußteilen der einzelnen Statorzähne radiale Schlitze ausgeformt sind, die eine elastische Verkleinerung des Fußteils beim Einführen in die korrespondierende Nut des Statorrings ermöglichen.

In der US 4,912,353 ist ein Stator offenbart, bei dem die über einen Innenring verbundenen Statorzähne mittels einer Schwalbenschwanzverbindung in einen äußeren Rückschlussring eingefügt werden. Die Zahnfüße weisen hierbei radiale Schlitze auf, die optional mit einem deformierbaren Material gefüllt sind.

### Vorteile der Erfindung

Das erfindungsgemäße Hauptelement für eine elektrische Maschine mit den Merkmalen des Anspruchs 1, hat den Vorteil, dass durch den gegenüber dem Zahnschaft wesentlich breiteren Zahnfuß die mechanische Stabilität der Polzähne in ihre Positionierungslage im Rückschlussjoch verbessert wird. Damit wird ein Verbiegen oder ein unzureichend genaues Positionieren und Ausrichten der Polzähne beim Einpressen der Polzähne in das Rückschlussjoch vermieden, was beim Einpressen der bekannten Polzähne mit einem gegenüber dem Zahnschaft kleineren Zahnfuß nicht auszuschließen ist. Da schlecht positionierte, schräge, verzogene und nicht fluchtende Zähne bei permanentmagnetisch erregten elektrischen Maschinen unerwünschte Rastmomente hervorrufen, werden durch die erfindungsgemäße konstruktive Ausführung der Zahnfüße auch die magnetischen Eigenschaften der elektrischen Maschine verbessert.

Durch die in den weiteren Ansprüchen aufgeführten Maßnahmen sind vorteilhafte Weiterbildungen und Verbesserungen des im Anspruch 1 angegebenen Hauptelements möglich.

Gemäß einer vorteilhaften Ausführungsform der Erfindung ist in Umfangsrichtung des Rückschlussjoches gesehen die Breite des Zahnfußes größer bemessen als die Breite des Zahnkopfes eines jeden Polzahns. Dadurch wird die Zahnfußbreite maximiert und dabei sichergestellt, dass im Rückschlussjoch zwischen den dort eingearbeiteten Aufnahmenuten für die Polzähne noch ein ausreichend stabiler Steg zum stabilen Übergreifen benachbarter Zahnfüße verbleibt.

Gemäß einer vorteilhaften Ausführungsform der Erfindung ist im Bereich der aneinanderliegenden Fügeflächen von Rückschlussjoch und Zahnfüßen innerhalb jeder Aufnahmenut mindestens ein sich axial erstreckender, schmaler Luftspalt vorhanden, dessen in Umfangsrichtung gesehene Breite deutlich kleiner ist als die Breite des Zahnschafts. Durch diese konstruktive Maßnahme wird die Kontaktfläche zwischen dem Zahnfuß der Polzähne und dem Nutgrund der Aufnahmenut im Rückschlussjoch reduziert, so dass die Polzähne mit einer kleineren Fügekraft in die Aufnahmenuten eingesetzt werden können und trotzdem ihre gewünschte exakte Ausrichtung erhalten. Dieser mindestens eine Luftspalt in jeder Aufnahmenut ist im Magnetkreis von Rückschlussjoch und Polzähnen insofern unkritisch und reduziert nicht das Magnetfeld, da er entweder parallel zu den Flusslinien verläuft oder - falls er symmetrisch zur radialen Mittellinie des Polzahns angeordnet wird - nicht im magnetischen Hauptfluss liegt.

Gemäß einer vorteilhaften Ausführungsform der Erfindung wird die radiale Breite des mindestens einen schmalen Luftspalts mit etwa 0,1 - 0,15 mm ausgeführt.

Gemäß einer bevorzugten Ausführungsform der Erfindung ist der mindestens eine Luftspalt mittels eines axialen Einstichs im Nutgrund der Aufnahmenut und/oder im Zahnfuß realisiert. Bevorzugt werden dabei innerhalb jeder Aufnahmenut drei in Umfangsrichtung beabstandete Einstiche vorgesehen, von denen der mittlere Einstich symmetrisch zur radialen Zahnschaftmitte angeordnet ist. Zwei der drei Einstiche sind damit im Bereich des Rückschlusses angeordnet, in dem der Fluss parallel zur in Umfangsrichtung gesehenen Luftspaltbreite verläuft, somit kein Flussverlust entsteht, da die Verringerung der Querschnittsfläche im Rückschlussjoch im Bereich der Einstiche sehr gering ist und beispielsweise bei einer radialen Luftspaltbreite von 0,1 mm nur 2% beträgt. Der mittige Einstich verläuft direkt über dem Zahnschaft und liegt dort nicht im Bereich des Hauptflusspfades.

Gemäß einer alternativen Ausführungsform der Erfindung sind insgesamt zwei Luftspalte vorgesehen, von denen jeder in Umfangsrichtung gesehen in einem Endbereich der Aufnahmenut angeordnet ist. Vorteilhaft werden dabei die beiden Luftspalte dadurch gebildet, dass jeder Endbereich des Zahnfußes einen Krümmungsradius aufweist, der kleiner ist als der Krümmungsradius von Zahnfuß und Nutgrund der Aufnahmenut.

Gemäß einer vorteilhaften Ausführungsform der Erfindung weist die Presssitzverbindung Schwalbenschwanzform auf, bei der jeweils ein schwalbenschwanzförmig ausgebildeter Zahnfuß in die einen daran angepassten, schwalbenschwanzförmigen, lichten Nutquerschnitt aufweisende Aufnahmenut eingepresst ist. Der bekannte Vorteil einer Schwalbenschwanzverbindung ist der zuverlässige Presssitz und die relativ einfache Fertigung.

Gemäß einer vorteilhaften Ausführungsform der Erfindung sind das Rückschlussjoch und die Polzähne jeweils aus einer Vielzahl von axial aneinandergereihten Blechprofillamellen durch Stanzpaketieren zusammengesetzt. Eine Blechprofillamelle des Rückschlussjochs und eine der Anzahl der Polzähne entsprechende Zahl von Blechprofillamellen der Polzähne werden gemeinsam aus einer Blechplatine gestanzt. Durch diese Aufteilung der Blechprofillamellen von Statorzähnen und Rückschlussjoch entsteht beim Stanzen ein nur minimaler Blechabfall.

### Zeichnung

Die Erfindung ist anhand eines in der Zeichnung dargestellten Ausführungsbeispiels im folgenden näher beschrieben. Es zeigen:
- Fig. 1: einen Querschnitt eines bürstenlosen Synchronmotors mit wicklungslosem Außenstator und permanentmagneterregtem Innenrotor,
- Fig. 2: einen Querschnitt eines Rückschlussjochs im Stator gemäß Fig. 1,
- Fig. 3: eine Ansicht in axialer Richtung eines Polzahns im Stator in Fig. 1,
- Fig. 4: eine vergrößerte Darstellung des Ausschnitts IV in Fig. 1,
- Fig. 5 und 6: jeweils eine gleiche Darstellung wie in Fig. 4 mit einer konstruktiven Modifikation,
- Fig. 7: eine Darstellung der Magnetflussverteilung im Stator und Rotor des Synchronmotors in Fig. 1,
- Fig. 8: eine vergrößerte Darstellung des Ausschnitts VIII in Fig. 7,
- Fig. 9: eine Draufsicht einer Blechplatine zum Ausstanzen von Blechprofillamellen.

### Beschreibung des Ausführungsbeispiels

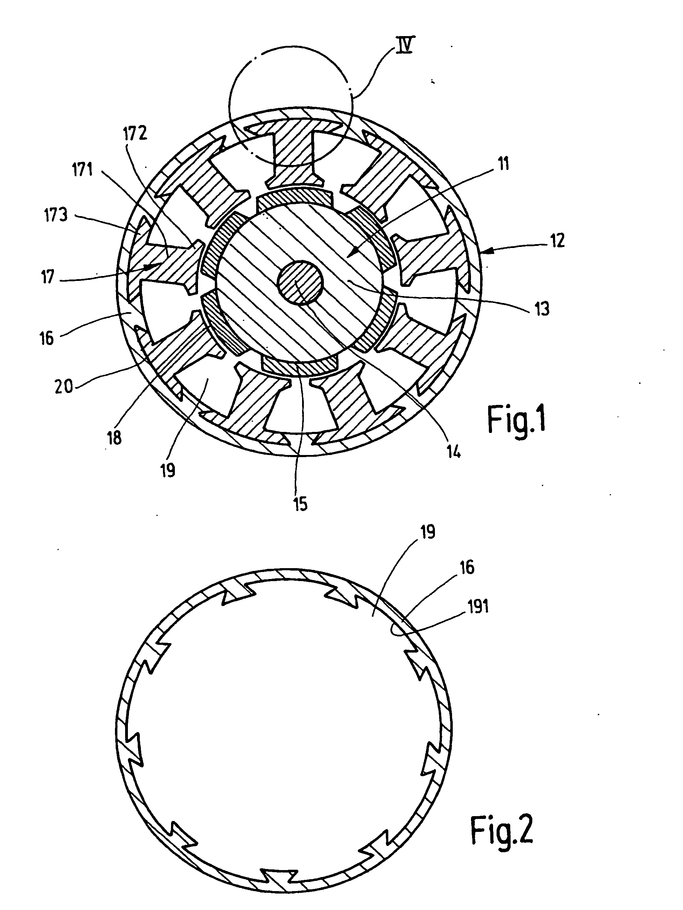

Der in Fig. 1 im Querschnitt dargestellte, permanentmagnetisch erregte, elektronisch kommutierte Synchronmotor als Ausführungsbeispiel für eine allgemeine elektrische Maschine ist als sog. Innenläufermotor konzipiert und weist einen Rotor 11 und einen den Rotor 11 konzentrisch umschließenden Stator 12 auf. Der Motor kann aber auch als Außenläufermotor konzipiert werden, bei dem der Stator konzentrisch von dem Rotor umschlossen wird. Der Rotor 11 weist einen Rotorkörper 13 auf, der drehfest auf einer Rotorwelle 14 sitzt und an seinem Außenumfang eine Mehrzahl, hier sechs, Permanentmagnetsegmente 15 trägt. Der Rotorkörper 13 ist aus einer Vielzahl von axial hintereinandergereihten, aneinanderliegenden Blechlamellen zusammengesetzt, die durch Stanzpaketieren zusammengehalten werden.

Der Stator 12 weist ein hohlzylindrisches Rückschlussjoch 16 sowie eine Mehrzahl, hier neun, Polzähne 17 auf, die über den Umfang des Rückschlussjochs 16 äquidistant angeordnet sind, radial von dem Rückschlussjoch 16 abstehen und mit den Permanentmagnetsegmenten 15 einen Arbeitsluftspalt 18 einschließen. Die separat vom Rückschlussjoch 16 gefertigten Polzähne 17 sind durch Presssitz im Rückschlussjoch 16 gehalten und schließen zwischen sich eine Mehrzahl, hier insgesamt neun Nuten 19 ein, die eine hier nicht dargestellte Statorwicklung aufnehmen. Jeder Polzahn 17 weist einen Zahnschaft 171, einen gegenüber dem Zahnschaft 171 verbreiterten Zahnkopf 172 und einen Zahnfuß 173 auf, mit dem der Polzahn 17 in das Rückschlussjoch 16 eingesetzt ist. Auf die Zahnschäfte 171 werden Spulen der Statorwicklung aufgewickelt. Jede Spule wird stirnseitig einerseits von den Zahnkopf 172 und andererseits von dem Zahnfuß 173 gehalten. Jeweils eine Spule füllt zur Hälfte zwei benachbarte Nuten 19 aus.

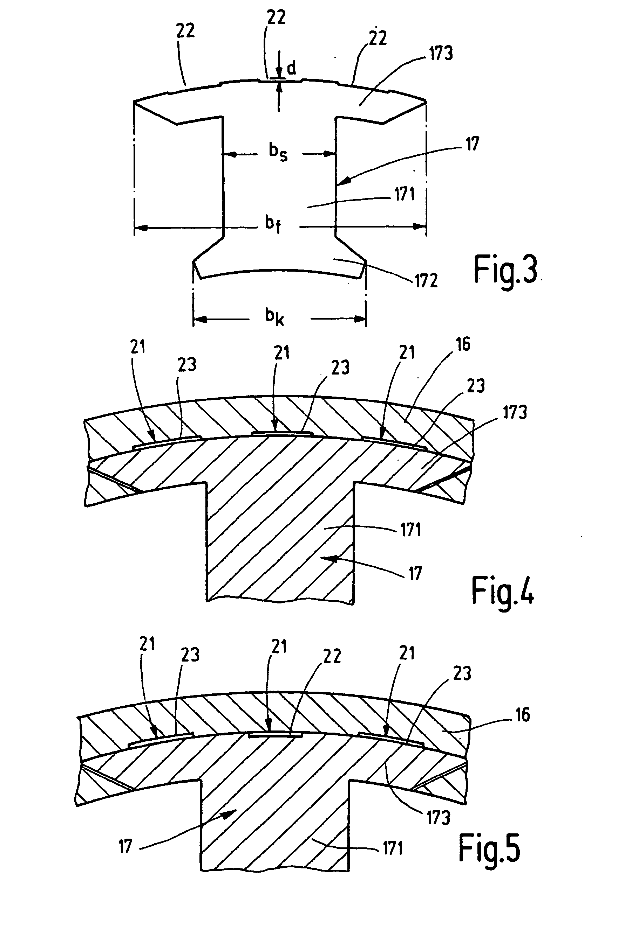

Zur Presssitzverbindung der Polzähne 17 mit dem Rückschlussjoch 16 sind die Zahnfüße 173 der Polzähne 17 schwalbenschwanzförmig ausgebildet und ist in dem Innenmantel des Rückschlussjochs 16 eine der Anzahl der Polzähne 17 entsprechende Anzahl von axial durchgehenden Aufnahmenuten 20 eingearbeitet, deren lichtes Querschnittsprofil ebenfalls Schwalbenschwanzform aufweist und an die Zahnfüße 173 zu deren formschlüssigen Aufnahme angepasst ist. Die in Umfangsrichtung des Rückschlussjochs 16 gesehene Breite b_{f} der Zahnfüße 173 ist dabei wesentlich größer bemessen als die in Umfangsrichtung des Rückschlussjochs 16 gesehene Breite bₛ der Zahnschäfte 171 und größer als die Breite bₖ der Zahnköpfe 172 (Fig. 3).

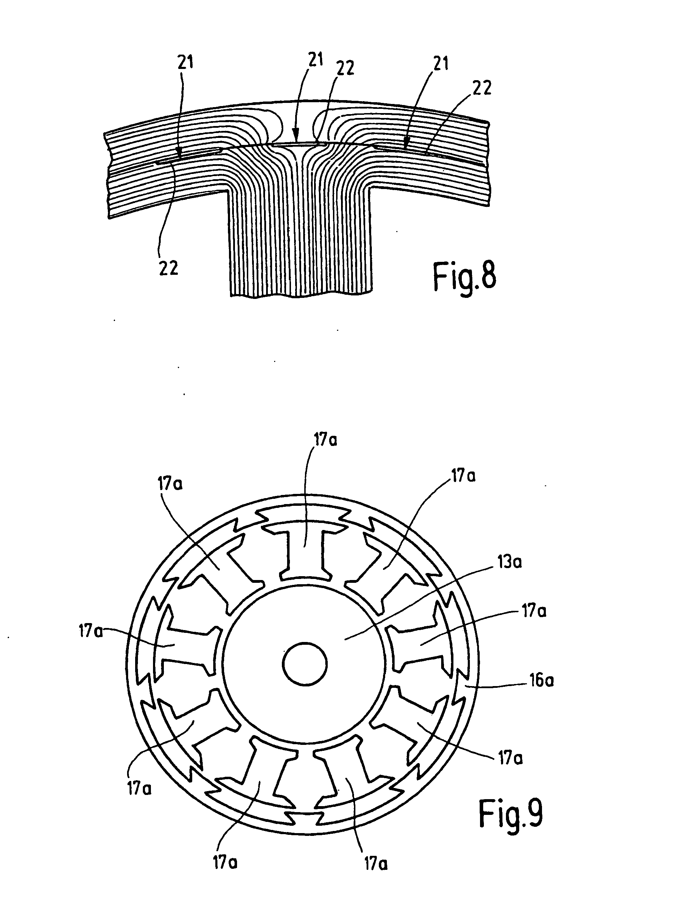

Das Rückschlussjoch 16 einerseits und die Polzähne 17 andererseits sind ebenso wie der Rotorkörper 13 aus Blechlamellenprofilen durch Stanzpaketieren zusammengesetzt. Um beim Stanzen der Blechprofile möglichst wenig Blechabfall zu erhalten wird eine Blechprofillamelle 13a des Rotorkörpers 13, eine Blechprofillamelle 16a des Rückschlussjochs 16 und eine der Anzahl der Polzähne 17 entsprechende Anzahl von Blechprofillamellen 17a der Polzähne 17 gemeinsam aus einer Blechplatine gestanzt, wobei die Anordnung der einzelnen Blechprofillamellen 13a, 16a, 17a im Stanzschnitt so vorgenommen wird wie dies in Fig. 9 dargestellt ist.

Die stanzpaketierten Polzähne 17 werden in die Aufnahmenuten 20 des stanzpaketierten Rückschlussjochs 16 eingepresst, wobei durch den sehr breiten Zahnfuß 173 eine genaue Einpressposition und radiale Ausrichtung der Statorzähne gewährleistet wird. Durch den sehr breiten Zahnfuß 173 wird auch die Einpresskraft sehr groß, da die Einpresskraft proportional zur Länge der Einpresskante ist. Um beim Fügeprozess die erforderliche Einpresskraft zu reduzieren, sind im Bereich der aneinanderliegenden Kontakt- oder Fügeflächen von Rückschlussjoch 16 und Zahnfüßen 173 innerhalb jeder Aufnahmenut 20 schmale, axial durchgehende Luftspalte 21 vorgesehen, durch die die Kontaktfläche zwischen dem schalenförmigen Außenmantel des Zahnfußes 173 und dem schalenförmigen Nutgrund der Aufnahmenut 20 reduziert wird (Fig. 4 - 6). Die in Umfangrichtung des Rückschlussjoches 16 gesehene Breite der Luftspalte 21 ist kleiner als die Breite bₛ der Zahnschäfte 171. Die radiale Breite oder Tiefe d der Luftspalte 21 ist sehr klein und beträgt 0,1 - 0,15 mm.

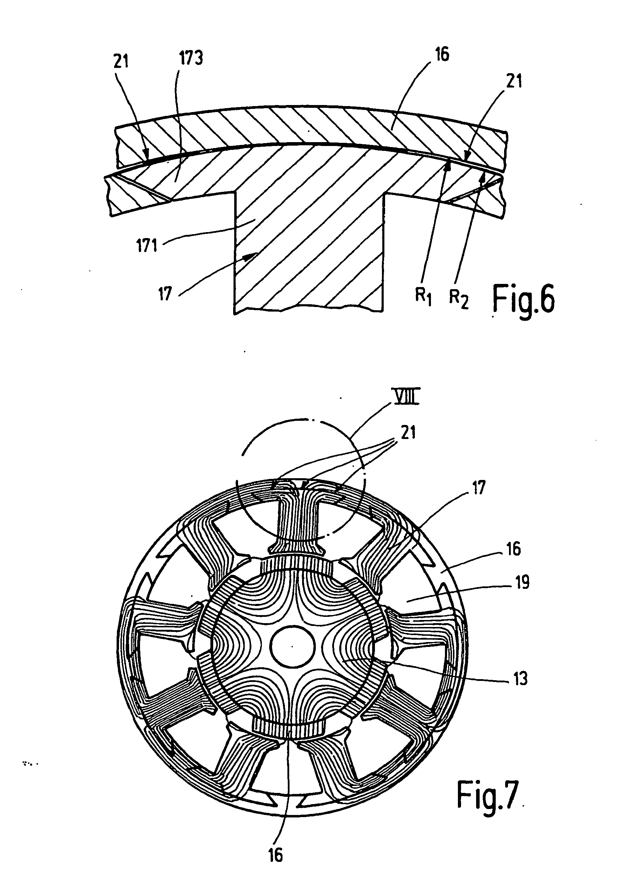

Im Ausführungsbeispiel der Fig. 3 sind drei Luftspalte 21 durch drei axial sich erstreckende Einstiche 22 in der schalenförmigen Außenflächen des Zahnfußes 173 realisiert. Der mittlere Einstich 22 ist symmetrisch zur radialen Mittellinie des Polzahns 17 angeordnet, während die beiden anderen Einstiche 22 dazu symmetrisch in dem über den Zahnschaft 171 hinausragenden Bereich des Zahnfußes 173 angeordnet sind. Die Luftspalte 21 ergeben im Magnetkreis des Stators 12 kleine, luftgefüllte Fenster, die aber bezüglich der Flussführung unkritisch sind. Wie in dem in Fig. 7 dargestellten Feldlinienverlauf des magnetischen Feldes ersichtlich ist, liegen die beiden Luftspalte 21 im Rückschluss benachbarter Polzähne 17, wobei in diesen Bereichen der Fluss parallel zu den Einstichen 22 verläuft. Die Verringerung der Querschnittsfläche des Magnetkreises im Bereich der Luftspalte 21 ist sehr gering und beträgt bei einer radialen Tiefe d = 0,1 mm der Luftspalte 21 nur 2%. Damit entstehen keine nennenswerte Flussverluste. Wie der in Fig. 8 dargestellte, vergrößerte Ausschnitt des Feldlinienverlaufs zeigt, liegt der mittlere Luftspalt 21 nicht im Bereich des Hauptflusspfades, so dass auch hier keine nennenswerte Flussverluste auftreten.

Im Ausführungsbeispiel der Fig. 4 sind die Luftspalte 21 durch Einstiche 23 im Nutgrund der Aufnahmenuten 20 realisiert. Die Anordnung und Bemessung der Einstiche 23 in Fig. 4 entspricht der Anordnung und Bemessung der Einstiche 22 in Fig. 3.

Im Ausführungsbeispiel der Fig. 5 sind die beiden äußeren Luftspalte 21 durch Einstiche 23 im Nutgrund der Aufnahmenut 20 und der mittlere Luftspalt 21 durch einen Einstich 22 in der schalenförmigen Außenfläche des Zahnfußes 173 realisiert.

Im Ausführungsbeispiel der Fig. 6 sind nur zwei Luftspalte 21 vorhanden, von denen jeweils einer in einem Endbereich des Zahnfußes 173 liegt. Die Luftspalte 21 werden hier dadurch erhalten, dass jeder Endbereich des Zahnfußes 173 einen Krümmungsradius R₂ aufweist, der kleiner ist als der Krümmungsradius R₁ von Zahnfuß 173 und Nutgrund der Aufnahmenut 20.

## Patentansprüche

1. Hauptelement für eine elektrische Maschine, insbesondere Stator für einen permanentmagnetisch erregten, elektronisch kommutierten Motor, mit einem hohlzylindrischen Rückschlussjoch (16) mit einer Mehrzahl von in das Rückschlussjoch (16) eingesetzten Polzähnen (17) zur Aufnahme jeweils einer Spule einer elektrischen Wichtung, die jeweils einen Zahnschaft (171), einen gegenüber dem Zahnschaft (171) verbreiterten Zahnkopf (172) und einen Zahnfuß (173) aufweisen, und mit formschlüssigen Presssitzverbindungen zwischen dem Rückschlussjoch (16) und den Polzähnen (17), die jeweils eine im Rückschlussjoch (16) eingeformte Aufnahmenut (20) für einen an den lichten Querschnitt der Aufnahmenut (20) angepassten Zahnfuß (173) aufweisen, wobei in Umfangsrichtung des Rückschlussjochs (16) gesehen die Breite (b_{f}) des Zahnfußes (173) wesentlich größer ist als die Breite (bₛ) des Zahnschaftes (171), und im Bereich der aneinanderliegenden Fügeflächen von Rückschlussjoch (16) und Zahnfüßen (173) innerhalb jeder Aufnahmenut (20) mindestens ein axial sich erstreckender Luftspalt (21) vorgesehen ist, dessen in Umfangsrichtung gesehene Abmessung kleiner als die Breite (bₛ) des Zahnschafts (171) ist, wobei der Luftspalt (21) als schmaler, axial durchgehender Luftspalt (21) mit einer sehr kleinen radialen Tiefe d ausgebildet ist

2. Hauptelement nach Anspruch 1, **dadurch gekennzeichnet, dass** in Umfangsrichtung des Rückschlussjochs (16) gesehen die Breite (b_{f}) des Zahnfußes (173) größer ist als die Breite (bₖ) des Zahnkopfes (172).

3. Hauptelement nach Anspruch 1 oder 2, **dadurch gekennzeichnet, dass** durch die Ausbildung der Luftspalte (21) die Kontaktfläche zwischen einem schalenförmigen Außenmantel des Zahnfußes (173) und einem schalenförmigen Nutgrund der Aufnahmenut (20) reduziert wird.

4. Hauptelement nach Anspruch 3, **dadurch gekennzeichnet, dass** die radiale Breite des Luftspalts (21) etwa 0,1- 0,15 mm beträgt.

5. Hauptelement nach Anspruch 3 oder 4, **dadurch gekennzeichnet, dass** der Luftspalt (21) mittels eines axialen Einstichs im Zahnfuß (173) und/oder im Nutgrund der Aufnahmenut (20) realisiert ist.

6. Hauptelement nach Anspruch 5, **dadurch gekennzeichnet, dass** innerhalb jeder Aufnahmenut (20) drei in Umfangsrichtung voneinander beabstandete Einstiche (22, 23) vorgesehen sind, von denen der mittlere symmetrisch zur radialen Mittellinie des Zahnschafts (171) angeordnet ist.

7. Hauptelement nach Anspruch 3 oder 4, **dadurch gekennzeichnet, dass** in Umfangsrichtung des Rückschlussjochs (16) gesehen in jedem Endbereich innerhalb einer Aufnahmenut (20) ein Luftspalt (21) vorgesehen ist.

8. Hauptelement nach Anspruch 7, **dadurch gekennzeichnet, dass** jeder Endbereich des Zahnfußes (173) einen Krümmungsradius (R₂) aufweist, der kleiner ist als der Krümmungsradius (R₁) des Nutgrund der Aufnahmenut (20).

9. Hauptelement nach einem der Ansprüche 1 - 8, **dadurch gekennzeichnet, dass** die Presssitzverbindungen Schwalbenschwanzform aufweisen, bei der jeweils ein schwalbenschwanzförmig ausgebildeter Zahnfuß (173) in die einen daran angepassten, schwalbenschwanzförmigen lichten Nutquerschnitt aufweisende Aufnahmenut (20) eingepresst ist.

10. Hauptelement nach einem der Ansprüche 1 - 9, **dadurch gekennzeichnet, dass** das Rückschlussjoch (16) und die Polzähne (17) jeweils aus einer Vielzahl von axial aneinandergereihten Blechprofillamellen (16a, 17a) zusammengesetzt ist und dass eine Blechprofillamelle (16a) des Rückschlussjochs (16) und eine der Anzahl der Polzähne (17) entsprechende Anzahl von Blechprofillamellen (17a) der Polzähne (17) gemeinsam aus einer Blechplatine gestanzt sind.

## Claims

1. Main element for an electric machine, in particular stator for an electronically commutated permanent magnet motor, with a hollow-cylindrical magnetic return path yoke (16) having a plurality of pole teeth (17) inserted into the magnetic return path yoke (16) for receiving in each case one coil of an electrical winding, which pole teeth each have a tooth shaft (171), a tooth tip (172) which is wider than the tooth shaft (171) and a tooth base (173), and having form-fitting press-fit connections between the magnetic return path yoke (16) and the pole teeth (17), which each have a receiving slot (20) formed in the magnetic return path yoke (16) for a tooth base (173) matched to the clear cross section of the receiving slot (20), wherein, when viewed in the circumferential direction of the magnetic return path yoke (16), the width (b_{f}) of the tooth base (173) is substantially greater than the width (bₛ) of the tooth shaft (171), and, in the region of the joint faces which bear against one another of the magnetic return path yoke (16) and the tooth bases (173), at least one axially extending air gap (21) is provided within each receiving slot (20), the dimension of said air gap, when viewed in the circumferential direction, being smaller than the width (bₛ) of the tooth shaft (171), wherein the air gap (21) is formed as a narrow, axially continuous air gap (21) with a very small radial depth d.

2. Main element according to Claim 1, **characterized in that**, when viewed in the circumferential direction of the magnetic return path yoke (16), the width (b_{f}) of the tooth base (173) is greater than the width (bₖ) of the tooth tip (172).

3. Main element according to Claim 1 or 2, **characterized in that**, by virtue of the formation of the air gap (21), the contact area between a shell-shaped outer casing of the tooth base (173) and a shell-shaped slot base of the receiving slot (20) is reduced.

4. Main element according to Claim 3, **characterized in that** the radial width of the air gap (21) is approximately 0.1 - 0.15 mm.

5. Main element according to Claim 3 or 4, **characterized in that** the air gap (21) is implemented by means of an axial puncture in the tooth base (173) and/or in the slot base of the receiving slot (20).

6. Main element according to Claim 5, **characterized in that** three punctures (22, 23) are provided within each receiving slot (20), which punctures are spaced apart from one another in the circumferential direction, and of which punctures the central puncture is arranged symmetrically with respect to the radial centre line of the tooth shaft (171).

7. Main element according to Claim 3 or 4, **characterized in that**, when viewed in the circumferential direction of the magnetic return path yoke (16), an air gap (21) is provided in each end region within a receiving slot (20).

8. Main element according to Claim 7, **characterized in that** each end region of the tooth base (173) has a radius of curvature (R₂) that is smaller than the radius of curvature (R₁) of the slot base of the receiving slot (20).

9. Main element according to one of Claims 1-8, **characterized in that** the press-fit connections have a dovetail shape, in which in each case one tooth base (173) in the form of a dovetail is pressed into the receiving slot (20), which has a matching dovetail-shaped clear slot cross section.

10. Main element according to one of Claims 1-9, **characterized in that** the magnetic return path yoke (16) and the pole teeth (17) each comprise a multiplicity of sheet-metal profile laminations (16a, 17a) arranged axially next to one another in a row, and **in that** a sheet-metal profile lamination (16a) of the magnetic return path yoke (16) and a number of sheet-metal profile laminations (17a) of the pole teeth (17) that corresponds to the number of pole teeth (17) are stamped jointly out of one metal sheet.

## Revendications

1. Elément principal d'une machine électrique, en particulier stator pour un moteur à excitation par aimant permanent, à commutation électronique, comprenant une culasse de reflux (16) cylindrique creuse ayant une pluralité de dents polaires (17) insérées dans la culasse de reflux (16) pour recevoir à chaque fois une bobine d'un enroulement électrique, qui présentent à chaque fois une tige de dent (171), une tête de dent (172) élargie par rapport à la tige de dent (171) et une base de dent (173), et comprenant des connexions par ajustement serré entre la culasse de reflux (16) et les dents polaires (17), qui présentent à chaque fois une rainure de réception (20) façonnée dans la culasse de reflux (16) pour une base de dent (173) adaptée à la section transversale intérieure de la rainure de réception (20), la largeur (b_{f}) de la base de dent (173), vue dans la direction périphérique de la culasse de reflux (16), étant sensiblement supérieure à la largeur (bₛ) de la tige de dent (171) et dans la région des faces de joint en contact l'une avec l'autre de la culasse de reflux (16) et des bases de dent (173), à l'intérieur de chaque rainure de réception (20), étant prévu au moins un entrefer (21) s'étendant axialement, dont la dimension dans la direction périphérique est inférieure à la largeur (bₛ) de la tige de dent (171), l'entrefer (21) étant réalisé sous forme d'entrefer étroit, axialement continu (21), avec une très petite profondeur radiale d.

2. Elément principal selon la revendication 1, **caractérisé en ce que** la largeur (b_{f}) de la base de dent (173), vue dans la direction périphérique de la culasse de reflux (16), est supérieure à la largeur (bₖ) de la tête de dent (172).

3. Elément principal selon la revendication 1 ou 2, **caractérisé en ce que** par la réalisation de l'entrefer (21), la surface de contact entre une enveloppe extérieure en forme de coque de la base de dent (173) et une base de rainure en forme de coque de la rainure de réception (20) est réduite.

4. Elément principal selon la revendication 3, **caractérisé en ce que** la largeur radiale de l'entrefer (21) vaut environ 0,1 à 0,15 mm.

5. Elément principal selon la revendication 3 ou 4, **caractérisé en ce que** l'entrefer (21) est réalisé au moyen d'une encoche axiale dans la base de dent (173) et/ou dans la base de rainure de la rainure de réception (20).

6. Elément principal selon la revendication 5, **caractérisé en ce qu'**à l'intérieur de chaque rainure de réception (20) sont prévues trois encoches (22, 23) espacées les unes des autres dans la direction périphérique, dont l'encoche centrale est disposée symétriquement par rapport à l'axe médian radial de la tige de dent (171).

7. Elément principal selon la revendication 3 ou 4, **caractérisé en ce que**, vu dans la direction périphérique de la culasse de reflux (16), dans chaque région d'extrémité à l'intérieur d'une rainure de réception (20), est prévu un entrefer (21).

8. Elément principal selon la revendication 7, **caractérisé en ce que** chaque région d'extrémité de la base de dent (173) présente un rayon de courbure (R₂) qui est inférieur au rayon de courbure (R₁) de la base de rainure de la rainure de réception (20).

9. Elément principal selon l'une quelconque des revendications 1 à 8, **caractérisé en ce que** les connexions par ajustement serré présentent une forme en queue d'aronde, une base de dent (173) réalisée en forme de queue d'aronde étant à chaque fois pressée dans la rainure de réception (20) présentant une section transversale de rainure intérieure adaptée en forme de queue d'aronde.

10. Elément principal selon l'une quelconque des revendications 1 à 9, **caractérisé en ce que** la culasse de reflux (16) et les dents polaires (17) sont constituées à chaque fois d'une pluralité de lamelles profilées en tôle (16a, 17a) en rangées juxtaposées axialement et **en ce qu'**une lamelle profilée en tôle (16a) de la culasse de reflux (16) et un nombre de lamelles profilées (17a) des dents polaires (17) correspondant au nombre des dents polaires (17) sont estampés ensemble à partir d'une plaque de tôle.
